# EUROPÄISCHE PATENTSCHRIFT

(11) **EP 0 405 073 B1**
(45) Veröffentlichungstag und Bekanntmachung des Hinweises auf die Patenterteilung: **14.12.1994**
(21) Anmeldenummer: 90106760.3
(22) Anmeldetag: 09.04.1990
(51) Int. Cl.: B60T 13/26, B01D 53/26

(54) **Lufttrockner für von einem Kompressor aufladbare, wenigstens einen Luftvorratsbehälter aufweisende Druckluftanlagen, insbesondere Druckluftbremsanlagen von Fahrzeugen**
Air dryer for air pressure plants chargeable by a compressor, containing at least one air storing container, especially for air pressure brakes of vehicles
Sécheur d'air pour une installation d'air comprimé comprenant au moins un réservoir de stockage d'air et chargeable par un compresseur, en particulier pour une installation de freins à air comprimé de véhicules

(30) Priorität: 22.06.1989 DE 3920489
(43) Veröffentlichungstag der Anmeldung: 02.01.1991
(73) Patentinhaber: KNORR-BREMSE Systeme für Nutzfahrzeuge GmbH, 80809 München (DE)
(72) Erfinder: Unger, Hans, D-8044 Unterschleissheim (DE)

(56) Entgegenhaltungen:
- EP-A- 0 036 569
- EP-A- 0 049 739
- EP-A- 0 087 632
- FR-A- 2 620 949

## Beschreibung

Die Erfindung betrifft einen Lufttrockner nach dem Gattungsbegriff des Patentanspruches 1.

Lufttrockner dienen in Druckluftbremsanlagen zum Reinigen und zum Trocknen der von einem Kompressor geförderten Luft zum Regulieren des Betriebsdruckes in den Vorratsbehältern. Bei Einbau des Lufttrockners entfallen Entwässerungseinrichtungen ebenso wie zusätzliche Frostschutzeinrichtungen. Das Trocknen der Luft erfolgt mittels Adsorbtion in einem Molekularsieb, welches durch ein Trockenmittel von Granulatform gebildet ist. Zur Regeneration des Trockenmittels wird ein Teil der getrockneten Luft entspannt und in entgegengesetzter Richtung durch das Trockenmittel geleitet. Durch die Druckabsenkung sinkt der Partialdruck des Wasserdampfes in der Regenerationsluft, d.h. es bildet sich extrem trockene Luft, wodurch die Regenerationsluft in der Lage ist, die im Trockenmittel enthaltene Feuchtigkeit aufzunehmen.

Die zum Regenerieren dienende trockene Luft kann einem Regenerationsluftbehälter entnommen werden, sie kann jedoch auch aus der mit Druckluft zu beschickenden Druckluftanlage selbst zugeleitet werden. Es sind hierbei Lösungen bekannt (DE-A-3213236 u. FR-A-2620949), bei denen die erforderliche Regenerationsluftmenge druckabhängig gesteuert wird. Dies bedeutet, daß bei einer Druckreglerschaltspanne von üblicherweise 1 bar für die Menge der aus der Druckluftanlage zurückströmenden Regenerationsluft ein Druckabfall von ca. 0,3 bar geregelt werden muß. Auch bei der Anwendung relativ großer Steuerflächen in derartigen Regeleinrichtungen ist diese Art der Regelung erfahrungsgemäß mit einem großen Ungenauigkeitsgrad behaftet.

Bei gattungsgemäßen Regenerationseinrichtungen (EP-A-0036569) wird die Regenerationsluftmenge über eine am Lufttrockner angebaute Regenerationsluft-Schalteinrichtung in Form eines pneumatischen Zeitschalters gesteuert. Hierbei ist es notwendig, die Regenerationsluftmenge über eine einstellbare Düse auf das jeweiligen Volumen der Bremsanlage abzustimmen. Dies erhöht die erforderliche Typenvielfalt am Lufttrockner, d.h. für unterschiedliche Volumen von Bremsanlagen sind Regenerationseinrichtungen der genannten Art mit unterschiedlichen Düsen erforderlich.

Davon ausgehend besteht die Aufgabe der Erfindung darin, einen Lufttrockner der gattungsgemäßen Art so auszugestalten, daß die Regenerationseinrichtung unabhängig von der Größe der zu beschickenden Druckluftanlage in der Lage ist, die jeweils erforderliche Regenerationsluftmenge selbsttätig zu regeln.

Zur Lösung dieser Aufgabe dienen die Merkmale nach dem Kennzeichnungsteil des Patentanspruches 1.

Mit Hilfe des Schalters ist es möglich, unabhängig von der zu beschickenden Druckluftanlage, z.B. Bremsanlage des Fahrzeugs, ie erforderliche Regenerationsluft zur Verfügung zu stellen, da innerhalb der verfügbaren Schaltspanne in Abhängigkeit vom Anlagenvolumen diejenige Regenerationsluftmenge zur Verfügung steht, welche für das Trockenmittel in der Trocknungspatrone erforderlich ist. Es besteht hierbei direkte Abhängigkeit des Anlagenvolumens und der während der Schaltspanne des Druckreglers zu Verfügung stehenden, aus der Anlage rückströmenden Luft für die Regeneration des Trockenmittels. Die Einrichtung zur Steuerung der Regeneration öffnet mittels des kulissengesteuerten Ventilstößels die Verbindung aus der Druckluftanlage in das Trockenmittel des Lufttrockners in genau einstellbaren Schritten; hierzu sind an der Kulisse Schlitzführungen vorgesehen, welche den Schaltdruck des am Lufttrocknergehäuse integrierten Druckreglers zum Zwecke der Öffnung der Regenerationsluftverbindung dann zur Wirkung kommen lassen, wenn die Kulisse um einen vorbestimmten Winkelabstand gedreht, also um vorbestimmte Takte betätigt wurde.

Vorteilhafte Ausgestaltungen und Weiterbildungen sind in weiteren Unteransprüchen aufgeführt.

Die Erfindung ist nachfolgend anhand eines Ausführungsbeispiels unter Bezugnahme auf die beigefügte Zeichnung erläutert.
- Fig.1: ist eine Teilschnittansicht eines Lufttrockners mit dem an ihm integrierten Regenerationsluft-Schalter; und
- Fig.2: ist eine abgewickelte Ansicht der bei der Schalteinrichtung nach Fig.1 verwendeten Kulisse.

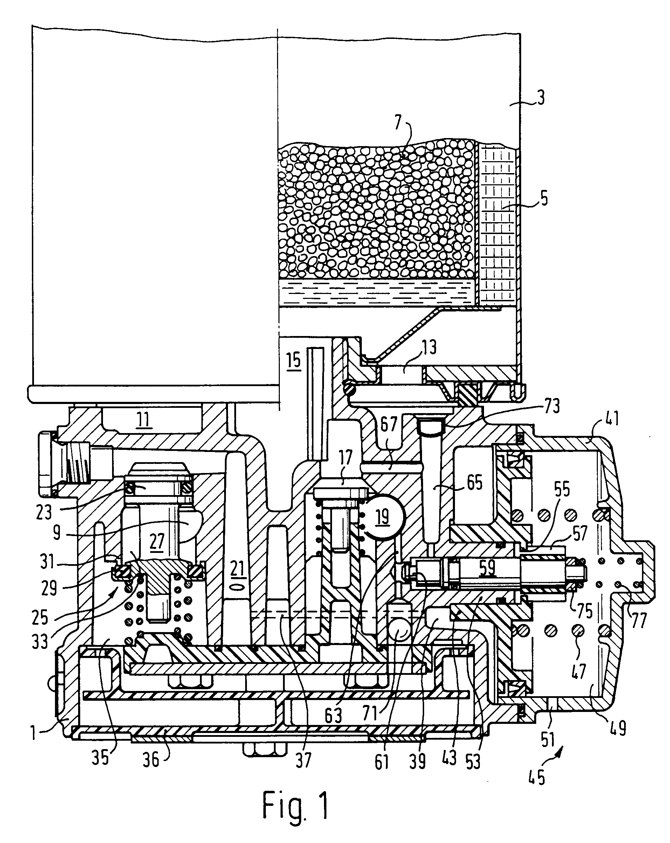

In Fig.1 der Zeichnung ist in Teilschnittansicht ein Lufttrockner dargestellt, welcher zum Reinigen und Trocknen der von einem Kompressor geförderten Luft dient. Der Lufttrockner ist mit einem Gehäuse 1 versehen, auf welchem eine Trocknungspatrone 3 sitzt. Die Trocknungspatrone ist in bekannter Weise mit einem ringförmigen Luftfilter 5 und einem Trockenmittel 7 versehen; es handelt sich hierbei z.B. um ein granulatförmiges, hochporöses Trockenmittel, welches in der Lage ist, an seiner Oberfläche Wasserdampf zu binden. In das Gehäuse 1 führt ein Eingangsanschluß 9, an welchem der Kompressor (nicht dargestellt) angeschlossen ist; der Eingangsanschluß 9 steht über eine (nicht dargestellte) Verbindung mit der Kammer 11 unmittelbar unterhalb des Luftfilters 5 der Trocknungspatrone 3 in Verbindung. Vom Kompressor geförderte Druckluft gelangt vom Eingangsanschluß 9 in die Kammer 11, tritt durch Öffnungen 13 an der Unterseite der Trocknungspatrone 3 hindurch und wird in den Bereich des Ringfilters 5 geleitet. An der (nicht dargestellten) Oberseite der Trocknungspatrone wird die im Luftfilter 5 von Verunreinigungen, wie Ölkohle und Öl befreite Druckluft umgeleitet und durch das Trockenmittel 7 anschließend nach unten gerichtet geleitet. Die auf diese Weise getrocknete Luft gelangt entlang in der in der Zeichnung wiedergegebenen Pfeildarstellung in eine weitere Kammer 15, aus welcher sie nach Passieren des in der Zeichnung wiedergebenen Rückschlagventils 17 in den Ausgangsanschluß 19 gelangt. Der Ausgangsanschluß 19 ist an die mit Druckluft zu versorgende Anlage, z.B. an den Luftvorratsbehälter der Bremsanlage des Fahrzeugs angeschlossen.

Im Gehäuse 1 ist fernerhin ein Kanal 21 enthalten, an welchen ein am Gehäuse integrierter (nicht dargestellter) Druckregler von an sich bekannter Wirkungsweise angeschlossen ist. Der Druckregler wird bei Erreichen des Abschaltdruckes der Druckluftanlage wirksam und beschickt den Kanal 21 mit einem Schaltdruck, welcher auf den Kolben 23 eines Abblasventils 25 einzuwirken vermag. Das Abblasventil 25 trägt auf dem mit dem Kolben 23 verbundenen Schaft 27 einen Ventilteller 29, welcher gegenüber einem gehäusefesten Sitz 31 wirkt und die oberhalb des Ventiltellers 29 befindliche Kammer 33 im normalen Betrieb gegenüber der mit Außenluft in Verbindung stehenden Kammer 35 sperrt. Bei Beaufschlagung des Kolbens 23 durch den Schaltdruck des Druckreglers wird der Ventilteller 29 von seinem Sitz 31 abgehoben, so daß in der Kammer 33 enthaltene Flüssigkeit und Verunreinigungen durch die vom Eingangsanschluß 9 anstehende Druckluft des Kompressors in die Kammer 35 und von dort in die Außenluft abgeblasen werden. Hierbei kann ein Schalldämpfer 36 vorgesehen sein, welcher die Luft passiert.

Der Kanal 21 ist fernerhin mittels der strichpunktiert wiedergegebenen Verbindung 37 mit einem Raum 39 verbunden, welcher einen in einem Schaltgehäuse 41 verschiebbaren Kolben 43 begrenzt. Der Kolben 43 ist Bestandteil eines pneumatisch-mechanischen Schalters 45, mittels welchem der Zeitpunkt der Regeneration des Trockenmittels durch Luft aus der Verbraucheranlage gesteuert wird. Der Kolben 43 wirkt gegenüber einer Feder 47, welche sich an der Innenseite des Schaltgehäuses 41 stützt, wobei der die Feder aufnehmende Raum 49 über eine Bohrung 51 mit der Außenluft in Verbindung steht. Der Kolben 43 ist unter gegenseitiger Abdichtung der Räume 39 und 49 auf einem zentralen Fortsatz 53 verschiebbar und greift mittels radial nach innen stehender Stifte 55 in eine Kulisse 57 ein, welche drehbar, jedoch axial gesichert am rechtsseitigen Ende eines im Innenraum des Fortsatzes 53 sich erstreckenden Ventilstößels 59 geführt ist. Der Ventilstößel 59 überwacht mit seinem linksseitigen, ein Dichtelement tragenden Ende 61 eine Verbindung zwischen einer mit dem Ausgangsanschluß 19 verbundenen Bohrung 63 und einem Kanal 65, welcher seinerseits über eine Bohrung 67 mit der zentral unterhalb der Trocknungspatrone 3 befindlichen Kammer 15 in Verbindung ist. Der Ventilstößel 59 vermag somit in nachfolgend beschriebener Weise eine freie Verbindung zwischen dem Ausgangsanschluß 19 und der Kammer 15 und demnach mit dem Inneren der Trocknungspatrone 3 herzustellen. Selbstverständlich sind die Bohrung 63 und der Kanal 65 an ihrem gegenüber der Außenseite des Gehäuses 1 mündenden Ende mittels Dichtelementen 71 und 73 verschlossen.

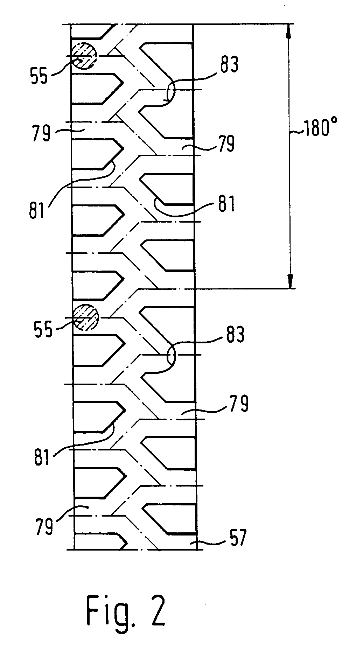

Die Kulisse 57 ist gemäß Darstellung am rechten Ende des Ventilstößels angeordnet und mittels eines Rings 75 axial unverschieblich gehaltert, wobei sich eine Feder 77 zwischen dem Ring 75 und der Innenseite des Schaltergehäuses stützt, derart, daß sie den Ventilstößel 59 versucht, nach links gerichtet zu verschieben. Gemäß der abgewickelten Darstellung in Fig.2 sind am Außenumfang der Kulisse 57 Schlitze 79 als Kulissenbahnen ausgebildet. In diesen Schlitzen 79 vermögen die Stifte 55 des Kolbens 43 zu gleiten, wenn der Kolben auf dem Fortsatz 53 vorwärts- und rückwärtsgerichtet Längsbewegungen vollführt. Die Schlitze 79 überschneiden sich in der Mitte der Kulisse winkelförmig, d.h. es sind Anschrägungen 81 vorgesehen, welche bei jeder Axialbewegung des Kolbens 43, d.h. der Stifte 55 mit diesen so in Anlage gelangen, daß die Kulisse in der Folge in einer Richtung gedreht wird. Dies hat zur Folge, daß die Stifte 55 im Verlaufe der Drehbewegung der Kulisse 57 in Eingriff mit einem Anschlag 83 gelangen, welcher die Relativ-Längsbewegung der Stifte 55 an einem Ende begrenzt, mit der Folge, daß die Stifte 55 die Kulisse 57 in vorbestimmter Winkelposition mitnehmen. Ist diese Position erreicht, dann bewegen sich der Kolben 43, die Kulisse 57 und der mit der Kulisse 57 verbundene Ventilstößel 59 als eine Einheit nach rechts gerichtet, was zur Folge hat, daß der Ventilstößel 59 nunmehr aus seiner in der Zeichnung dargestellten Verschlußlage zwischen der Bohrung 63 und dem Kanal 65 abgehoben wird. In der Darstellung nach Fig.2 der Zeichnung sind die Schlitze 79 derart am Umfang des Kulissenkörpers verteilt, daß drei unbetätigten Positionen eine betätigte Position, d.h. Mitnahmeposition entspricht, mit anderen Worten, der Winkelabstand zwischen zwei Anschlägen 83 beträgt 180°.

Die Wirkungsweise des vorstehend beschriebenen Lufttrockners mit der die Regeneration schaltenden Einrichtung ist wie folgt :
Bei der Lufttrocknung in der Aufpumpphase der Anlage strömt die vom (nicht dargestellten) Kompressor geförderte Luft durch den Eingangsanschluß 9 in den Luftfilter 5, von dort in das innerhalb der Trocknungspatrone befindliche Trockenmittel 7 und gelangt in die zentral unterhalb der Trocknungspatrone befindliche Kammer 15. Von dort strömt die Luft nach Passieren des sich druckabhängig öffnenden Rückschlagventils 17 in den Ausgangsanschluß 19 und somit in die zu beschickende Druckluftanlage, z.B. in den Luftvorratsbehälter der Bremsanlage eines Fahrzeugs. Innerhalb des Ringfilters 5 wird die Luft in bekannter Weise von Verunreinigungen wie Ölkohle und Öl befreit; außerdem wird sie im Luftfilter abgekühlt. Dadurch kondensiert bereits im Ringfilter ein Teil des Wassers und sammelt sich nach Passieren der Verbindung zwischen der Kammer 11 und der Kammer 33 in dieser an. Innerhalb des Trockenmittels 7 vollzieht sich die eigentliche Trocknung, d.h. die das Rückschlagventil 17 passierende Druckluft gelangt als getrocknete Luft in den Luftvorratsbehälter der Bremsanlage.

Wenn die Bremsanlage bis zum Abschaltdruck geffüllt ist, öffnet der am Gehäuse 1 integrierte, vom Druck der Bremsanlage beaufschlagte Druckregler mittels des von ihm in den Kanal 21 eingesteuerten Schaltdruckes das Abblasventil 25, d.h. der vom Regler-Schaltdruck beaufschlagte Kolben 23 hebt den Ventilteller 29 von seinem Sitz 31 ab, so daß der Kompressor über den Eingangsanschluß und die Kammer 33 nunmehr in die Kammer 35, d.h. in die Außenluft fördert. Hierbei werden in der Kammer 33 angesammeltes Kondenswasser und ein großer Teil der ausgefilterten Verunreinigungen mit ausgeschieden. Während dieser Phase bleibt infolge des Druckabbaues das Rückschlagventil 17 geschlossen.

Der im Kanal 21 nach Ansprechen des Druckreglers vorherrschende Schaltdruck wirkt infolge der bestehenden Verbindung über die Bohrung 63 auch im Raum 39, d.h. an der gemäß Darstellung linken Seite des Kolbens 43. Der Kolben 43 wird durch diesen Druck gegen die Kraft der Feder 47 nach rechts gerichtet verschoben, mit der Folge, daß die Stifte 55 die Kulisse 57 in vorgenannter Weise durchwandern und im Verlaufe dieser Axialbewegung eine Teildrehung der Kulisse 57 vollziehen. Befinden sich die Stifte 55 innerhalb eines freien Schlitzes, dann findet keine Axialbewegung des Ventilstößels 59 statt. Wenn der Vorratsbehälterdruck um die Schaltspanne bis auf den Einschaltdruck abgesunken ist, dann wird der (nicht dargestellte) Druckregler wieder wirksam, d.h. die Druckluftverbindung zum Kanal 21 wird unterbunden und der Kanal wird entlüftet. Infolge der Druckentlastung am Kolben 23 bewegt sich das Abblasventil 25 wieder in die in der Zeichnung dargestellte Verschlußlage, d.h. die am Ventilteller angreifende Feder 30 drückt den Ventilteller 29 gegen den Sitz 31 an. Die Druckentlastung des Kanals 21 hat fernerhin zur Folge, daß der Druck im Raum 39 abgebaut wird, so daß die Feder 47 den Kolben 43 wieder in die in der Zeichnung wiedergebene Position zurückschiebt. Hierbei vollzieht sich eine weitere Teildrehung der Kulisse 57, wie vorstehend beschrieben. Der nach wie vor laufende Kompressor fördert wieder Druckluft durch die Trocknungspatrone 3 hindurch, so daß über den Ausgangsanschluß 19 der Luftvorratsbehälter der Bremsanlage bis zum Erreichen des Abschaltdruckes gefüllt wird. Bei Verwendung der in Fig.2 wiedergegebenen Kulisse vollzieht sich der vorstehend beschriebene Schaltvorgang dreimal d.h. während drei Schalttakten entsprechend dreier Schaltpositionen des Schalters 45 erfolgt keine Regeneration in der Abblasphase. Erst wenn die Stifte 55 ihre Anschlagposition am Anschlag 83 erreicht haben, d.h. wenn der vierte Schalttakt erreicht ist, wird die Kulisse 57 bei der nach rechts gerichteten Bewegung des Kolbens 43 mitgenommen und wird in der Folge die Verbindung zwischen der Bohrung 63 und dem Kanal 65 geöffnet. Bei gleichzeitig geöffnetem Abblasventil, d.h. bei Druckabbau in der Trocknungspatrone 3, strömt nunmehr Luft aus der Bremsanlage, also aus dem Luftvorratsbehälter bei in Verschlußlage verbleibendem Rückschlagventil 17 über die vorgenannte Verbindung 63,65,67 in die Kammer 15 und passiert das Trockenmittel 7. Die Luft der Druckluftanlage entspannt sich im feuchten Trockenmittel und entzieht diesem hierdurch das gebunden Wasser, ehe sie über den Luftfilter 5 und das Abblasventil zusammen mit der Druckluft des nach wie vor fördernden Kompressors ins Freie gelangt.

Wenn der Vorratsbehälterdruck der Bremsanlage um die Schaltspanne bis auf den Einschaltdruck des Druckreglers abgesunken ist, dann wird der Druckregler wiederum wirksam, d.h. das Abblasventil bewegt sich in die geschlossene Lage und der Kolben 43 kehrt in die in der Darstellung dargestellte linke Endlage zurück, mit der Folge, daß die Regenerationsluft-Verbindung zwischen der Bohrung 63 und dem Kanal 65 geschlossen wird. Hiermit ist die Regeneration des Trockenmittels in der Trocknungspatrone beendet und der Lufttrockner arbeitet wiederum in normaler Weise. Die Regeneration vollzieht sich somit jeweils während des vierten Schalttaktes der Kulisse, also nach Drehung der Kulisse um jeweils 180°. Natürlich ist die Kulisse in beliebiger Weise gestaltbar, derart, daß die Regeneration wahrend jedes dritten Schalttaktes etc. vollzogen wird.

Der wesentliche Vorteil der vorbeschriebenen Vorrichtung besteht darin, daß sie unabhängig von der Größenordnung der Anlage selbsttätig zur Wirkung kommt, d.h. die Regenerationsphase paßt sich ihrer Zeitdauer nach der Trocknungsphase an, da in der geöffneten Stellung des Ventilstößels eine Regenerationsluftmenge entsprechend der Druckreglerschaltspanne und dem Anlagevolumen durch das Trockenmittel in die Atmosphäre strömt. Die Zeitdauer der Regenerationsphase ist folglich ein direktes Maß für die Größe der Druckluftanlage.

### Bezugszeichenliste

- 1: Gehäuse
- 3: Trocknungspatrone
- 5: Luftfilter
- 7: Trockenmittel
- 9: Eingangsanschluß
- 11: Kammer
- 13: Öffnung
- 15: Kammer
- 17: Rückschlagventil
- 19: Ausgangsanschluß
- 21: Kanal
- 23: Kolben
- 25: Abblasventil
- 27: Schaft
- 29: Ventilteller
- 31: Sitz
- 33: Kammer
- 35: Kammer
- 36: Schalldämpfer
- 37: Verbindung
- 39: Raum
- 41: Schaltergehäuse
- 43: Kolben
- 45: Schalter
- 47: Feder
- 49: Raum
- 51: Bohrung
- 53: Fortsatz
- 55: Stift
- 57: Kulisse
- 59: Ventilstößel
- 61: Ende
- 63: Bohrung
- 65: Kanal
- 67: Bohrung
- 71: Dichtelement
- 73: Dichtelement
- 75: Ring
- 77: Feder
- 79: Schlitz
- 81: Anschrägung
- 83: Anschlag

## Patentansprüche

1. Lufttrockner für von einem Kompressor aufladbare, wenigstens einen Luftvorratsbehälter aufweisende Druckluftanlagen, insbesondere Druckluftbremsanlagen von Fahrzeugen, mit einem Gehäuse (1), an welchem ein mit dem Kompressor zu verbindender Eingangsanschluß (9) und ein mit dem Luftvorratsbehälter zu verbindender Ausgangsanschluß (19) vorgesehen sind, wobei am Gehäuse (1) eine einen Luftfilter (5) und ein regenerierbares Trockenmittel (7) enthaltende Trocknungspatrone (3) befestigt ist, derart, daß die zu trocknende Druckluft in Reihe den Luftfilter (5), das Trockenmittel (7) und ein im Gehäuse (1) dem Ausgangsanschluß (19) vorgeschaltetes, in Strömungsrichtung zu diesem öffnendes Rückschlagventil (17) durchströmt, und mit einem am Gehäuse (1) integrierten Druckregler, der mittels seines Schaltdrucks das Öffnen und Schließen einer in einer mit dem Eingangsanschluß (9) verbundenen Kammer (11) befindlichen Entwässerungs- und Entlastungsvorrichtung als auch eine Regenerationsluft-Schalteinrichtung (45) überwacht, derart, daß in der Regenerationsphase Druckluft in umgekehrtem Strömungssinn aus dem Luftvorratsbehälter durch das sich regenerierende Trockenmittel (7) und durch die Entwässerungs- und Entlastungsvorrichtung zur Atmosphäre abströmt,
dadurch gekennzeichnet,
daß die Regenerationsluft-Schalteinrichtung (45) als ein kulissengesteuerter Taktschalter für die Regenerationsphasen ausgebildet ist.

2. Lufttrockner nach Anspruch 1, dadurch gekennzeichnet, daß die Regenerationsluft-Schalteinrichtung folgende Merkmale aufweist:
a) ein vom Schaltdruck des Druckreglers beaufschlagbarer, gegen Federkraft verschiebbarer Kolben (43) ist mittels wenigstens eines Stifts (55) längsbeweglich in Schlitzen (79) einer Kulisse (57) geführt, wobei die Kulisse drehbar, jedoch axial unbeweglich am Außenumfang des Ventilstößels (59) gehaltert ist;
b) ein Ende des Ventilstößels (59) überwacht eine Bypass-Verbindung zwischen dem an den Luftvorratsbehälter angeschlossenen Ausgangsanschluß (19) und einer in freier Verbindung mit dem Trockenmittel (7) der Trocknungspatrone (3) stehenden Kammer (15);
c) die Schlitze (79) der Kulisse (57) sind so ausgebildet, daß infolge des Eingriffs des Stifts (55) bei jeder Axialbewegung des Kolbens eine schrittweise Drehung der Kulisse erfolgt; und
d) wenigstens einer der Schlitze (79) trägt endseitig einen Anschlag (83), an welchen der Stift (55) in vorbestimmter Drehlage der Kulisse (57) in Anschlagposition gelangt, derart, daß die Kulisse und der mit ihr verbundene Ventilstößel (59) in Anschlagposition unter Axialverschiebung des Kolbens (43) mitgenommen werden und die Bypass-Verbindung geöffnet wird, so daß Luft aus dem Luftvorratsbehälter, als Regenerationsluft das Trockenmittel der Trocknungspatrone (3) und den Luftfilter (5) passierend, über das in der Schaltphase des Druckreglers in geöffneter Position befindliche Abblasventil (25) in die Atmosphäre gelangt.

3. Lufttrockner nach einem der vorangehenden Ansprüche, dadurch gekennzeichnet, daß die Schlitze (79) der Kulisse (57) durch Anschrägungen (81) gekreuzt sind, derart, daß der Stift (55) im Verlaufe seiner Axialbewegungen, in Anlage mit den Anschrägungen gelangend, die Kulisse in einer Drehrichtung schrittweise bewegt.

4. Lufttrockner nach Anspruch 3 oder 4, dadurch gekennzeichnet, daß jeder vierte Schlitz (79) am in Betätigungsrichtung des Kolbens (43) endseitigen Auslauf einen Anschlag (83) trägt, derart, daß bei jeder vierten Schaltbetätigung des Druckreglers eine Mitnahme des Ventilstößels (59) durch den Kolben (43) erfolgt.

5. Lufttrockner nach einem der vorangehenden Ansprüche, dadurch gekennzeichnet, daß der Ventilstößel (59) bei in Mitnahmeposition befindlichem Stift (55) während der Schaltspanne des Druckreglers in geöffneter Lage gehalten wird, derart, daß die Regenerationsluftmenge für das Trockenmittel der Druckreglerschaltspanne und dem Anlagevolumen entspricht.

## Claims

1. Air dryer for compressed air systems which are chargeable by a compressor and possess one or more air reservoirs, in particular, for compressed air brake systems of vehicles, comprising a casing (1) which has an inlet port (9) for connection to the compressor and an outlet port (19) for connection to the air reservoir; a drying cartridge (3) containing an air filter (5) and a regenerable desiccant (7) mounted on the casing (1) in such a way that the compressed air to be dried flows, in sequence, through the air filter (5), the desiccant (7) and a check valve (17), preceding the outlet port (19) and opening towards the latter in the direction of flow within the casing (1); a pressure controller, integral with the casing (1) which controls, by means of its switching pressure, both the opening and closing of a drainage and relief device located within a chamber (11) connected to the inlet port (9); and a regeneration air switching device (45) so that, in the regeneration phase, compressed air flows, in the reverse direction of flow, from the air reservoir through the regenerating desiccant (7) and through the drainage and relief device into the atmosphere, characterized in that
the regeneration air switching device (45) is constructed as a link-driven timing switch for the regeneration phases.

2. Air dryer according to Claim 1, characterized in that the regeneration air switching device possesses the following features :
a) a piston (43), which is subjected to the switching pressure of the pressure controller and is displaceable against spring force, is guided in a longitudinal motion by means of one or more pins (55) within slots (79) in a link (57), the link being mounted on the outer periphery of valve lifter (59) so that it is capable of rotation but incapable of axial movement;
b) one end of the valve lifter (59) controls a bypass connection between the outlet port (19) connected to the air reservoir and a chamber (15) which is openly connected to the desiccant (7) of the drying cartridge (3);
c) the slots (79) of the link (57) are formed so that there is a progressive rotation of the link as a result of the engagement of the pin (55) with each axial movement of the piston; and
d) one or more of the slots (79) possesses an end stop (83) at which the pin (55), at a predefined rotational position of the link (57), reaches a stop position in such a way that the link and the valve lifter (59) connected to it are driven into a stop position by axial displacement of the piston (43) and the bypass connection is opened so that air from the air reservoir, passing through the desiccant of the drying cartridge (3) and the air filter (5) as regeneration air, enters the atmosphere through the exhaust valve (25) which is in the open position when the pressure controller is in the switching phase.

3. Air dryer according to any one of the preceding Claims, characterized in that the slots (79) of the link (57) intersect with oblique sections (81) in such a way that each pin (55), which engages with the oblique sections in the course of its axial movements, progressively moves the link in a rotational direction.

4. Air dryer according to either of Claims 3 or 4, characterized in that every fourth slot (79) possesses a stop (83) on the end runout in the direction of actuation of the piston (43) so that, on each fourth switching operation of the pressure controller, the valve lifter (59) is driven by the piston (43).

5. Air dryer according to any one of the preceding Claims characterized in that the valve lifter (59) is held in an open position, with each pin (55) in the driving position, when the pressure controller is in the switching phase so that the quantity of regeneration air for the desiccant matches the pressure controller switching phase and the capacity of the system.

## Revendications

1. Sécheur d'air pour des installations à air comprimé, qui peuvent être chargées par un compresseur et possèdent au moins un réservoir d'air, notamment des installations de freins à air comprimé de véhicules, comportant un boîtier (1), sur lequel sont prévus un raccord d'entrée (9) devant être raccordé au compresseur, et un raccord de sortie (19) devant être raccordé au réservoir d'air, une cartouche dessicative (3) contenant un filtre à air (5) et un agent dessicatif régénérable (7), étant fixée sur le boîtier (1), de telle sorte que l'air comprimé devant être séché traverse en série le filtre à air (5), l'agent dessicatif (7) et une soupape antiretour (17) qui est disposée en amont du raccord de sortie (19) dans le boîtier (1) et s'ouvre en direction de ce raccord dans la direction d'écoulement, et comportant un régulateur de pression, qui est intégré dans le boîtier (1) et qui contrôle, au moyen de sa pression à l'appareil de coupure, l'ouverture et la fermeture d'un dispositif de déshydratation et de détente, qui est situé dans une chambre (11) reliée au raccord d'entrée (9), et également un dispositif (45) de commutation d'air de régénération, de telle sorte que pendant la phase de régénération, de l'air comprimé est évacué en sens inverse du sens d'écoulement, du réservoir d'air en direction de l'atmosphère en traversant l'agent dessicatif autorégénérant (7) et le dispositif de déshydratation et de détente, caractérisé par le fait
que le dispositif (45) de commutation d'air de régénération est réalisé sous la forme d'un interrupteur à commande cadencée, qui est commandé par coulisse, pour les phases de régénération.

2. Sécheur d'air suivant la revendication 1, caractérisé par le fait que le dispositif de commutation d'air de régénération présente les caractéristiques suivantes :
a) un piston (43), qui peut être chargé par la pression à l'appareil de coupure du régulateur de pression et qui peut être déplacé à l'encontre de la force d'un ressort, est guidé dans son déplacement longitudinal, à l'aide d'au moins une tige (55), dans des fentes (79) d'une coulisse (57), cette dernière étant retenue de manière à pouvoir pivoter, mais sans possibilité de déplacement axial, sur la périphérie extérieure du poussoir de soupape (59);
b) une extrémité du poussoir de soupape (59) contrôle une liaison de dérivation entre le raccord de sortie (19), qui est raccordé au réservoir d'air, et une chambre (15), qui est reliée, selon une liaison libre, à l'agent dessicatif (7) de la cartouche dessicative (3);
c) les fentes (79) de la coulisse (55) sont agencées de telle sorte qu'en raison de l'engrènement de la tige (55), il se produit une rotation pas-à-pas de la coulisse lors de chaque déplacement axial du piston, et
d) au moins l'une des fentes (79) porte, à une extrémité, une butée (83), contre laquelle la tige (57) vient s'appliquer en butée pour une position en rotation prédéterminée de la coulisse (57), de telle sorte que la coulisse et le poussoir de soupape (59), qui lui est raccordé, soient entraînés dans la position de butée sous l'effet d'un déplacement axial du piston (43) et que la liaison de dérivation est ouverte, de sorte que de l'air parvienne du réservoir d'air à l'atmosphère, en tant qu'air de régénération traversant l'agent dessicatif de la cartouche dessicative (3) et le filtre à air (5), en passant par la soupape d'évacuation (25), qui est en position ouverte pendant la phase de commutation du régulateur de pression.

3. Sécheur d'air suivant l'une des revendications précédentes, caractérisé par le fait que des biseaux (81) croisent les fentes (79) de la coulisse (57) de telle sorte qu'au cours de ses déplacements axiaux et lorsqu'elle vient s'appliquer contre les biseaux, la tige (55) déplace pas-à-pas la coulisse dans un sens de rotation.

4. Sécheur d'air suivant la revendication 3 ou 4, caractérisé par le fait que chaque quatrième fente (79) porte une butée (83) au niveau de sa sortie d'extrémité dans la direction d'actionnement du piston (43), de sorte que, lors de chaque quatrième actionnement de commutation du régulateur de pression, il se produit un entraînement du poussoir de soupape (59) par le piston (43).

5. Sécheur d'air suivant l'une des revendications précédentes, caractérisé par le fait que le poussoir de soupape (59) est retenu dans la position ouverte lorsque la tige (55) est dans la position d'entraînement, pendant l'intervalle de commutation du règulateur de pression, de sorte que la quantité d'air de régénération pour l'agent dessicatif correspond à l'intervalle de commutation du régulateur de pression et au volume de l'installation.
